# EUROPÄISCHE PATENTSCHRIFT

(11) **EP 2 298 492 B1**
(45) Veröffentlichungstag und Bekanntmachung des Hinweises auf die Patenterteilung: **05.03.2014**
(21) Anmeldenummer: 10173216.2
(22) Anmeldetag: 18.08.2010
(51) Int. Cl.: B23Q 1/00

(54) **Spannvorrichtung zur Fixierung eines Bauteils**
Tensioning device for fixing a component
Dispositif de serrage pour la fixation d'un composant

(30) Priorität: 22.09.2009 DE 102009042271
(43) Veröffentlichungstag der Anmeldung: 23.03.2011
(73) Patentinhaber: Schunk GmbH & Co. KG Spann- und Greiftechnik, 74348 Lauffen (DE)
(72) Erfinder: Schräder, Philipp, 88512 Mengen (DE)
(74) Vertreter: DREISS Patentanwälte PartG mbB

(56) Entgegenhaltungen:
- EP-A1- 0 827 806
- EP-A1- 1 707 307
- EP-A1- 2 036 662
- DE-A1- 10 117 485
- DE-A1-102005 033 468

## Beschreibung

Die Erfindung betrifft eine Spannvorrichtung zur Fixierung eines Bauteils, mit einer in einem Grundkörper vorgesehen Aufnahme, in die das Bauteil einsetzbar ist, und mit Spannmitteln, mit denen in einer radial inneren Spannstellung das in der Aufnahme vorhandene Bauteil fixierbar und in einer radial äußeren Freigabestellung das Bauteil freigebbar ist. Derartige spannvorrichtungen sind in vielfältiger Art und weise bekannt und werden auch als Nullpunktspannsysteme bezeichnet.

Aus der DE 101 17 485 B4 ist eine Spannvorrichtung bekannt geworden, bei der die Spannmittel von Klemmelementen, die von einer elastischen Ringmembran umgeben sind, gebildet werden.

Aus der DE 10 2005 033 468 A1 ist eine Spannvorrichtung nach dem Oberbegriff des Anspruchs 1 bekannt geworden, bei der die Spannmittel mit Über- oder Unterdruck beaufschlagbare, verformbare Kammern umfassen, wobei durch Druckbeaufschlagung der Kammer das Spannelement in die Freigabestellung bewegt wird.

Der vorliegenden Erfindung liegt die Aufgabe zugrunde, eine eingangs beschriebene Spannvorrichtung derart weiterzubilden, dass sie zum einen technisch einfach realisierbar ist und zum anderen dennoch funktionssicher arbeitet.

Diese Aufgabe wird mit einer Spannvorrichtung mit den Merkmalen des Anspruchs 1 gelöst. Der Spannschieber kann dabei insbesondere blechstreifenartig mit vorzugsweise zwei einander gegenüberliegenden Längsseiten, welche sich im Wesentlichen in radialer Richtung erstrecken, ausgebildet sein. Der Spannschieber umfasst dabei einen radial inneren ersten Abschnitt, einen radial äußeren zweiten Abschnitt und einen zwischen dem ersten und dem zweiten Abschnitt liegenden Mittelabschnitt. Der radial äußere zweite Abschnitt ist dabei in radialer Richtung fest am Grundkörper angeordnet. Der radial innere erste Abschnitt ist in radialer Richtung verschieblich am Grundkörper geführt angeordnet. Der Spannschieber ist dabei derart ausgebildet, dass bei Beaufschlagen des Mittelabschnitts mit einer in axialer Richtung wirkenden Freigabekraft der Mittelabschnitt in axialer Richtung verlagert und dadurch der erste Abschnitt zur Erreichung der Freigabestellung nach radial außen bewegt wird. Zur Erzeugung der auf den Mittelabschnitt wirkenden Freigabekraft ist vorgesehen, dass wenigstens ein in einem Zylinderraum wenigstens einseitig fluidisch druckbeaufschlagbarer Kolben vorgesehen ist, der zur Druckbeaufschlagung des Mittelabschnitts mit der Freigabekraft aus einer Spannlage in eine Freigabelage bringbar ist. Insbesondere kann der Kolben einseitig druckbeaufschlagbar und mittels Federelementen vorgespannt ausgebildet sein. Dabei befindet sich dann bei Drucklosschalten des Kolbens dieser in der Spannlage. Wird der Zylinderraum druckbeaufschlagt, so bewegt sich der Kolben in die Freigabelage, wobei gleichzeitig der Mittelabschnitt mit der Freigabekraft beaufschlagt wird. Bei Erreichen der Endhublage des Kolbens hat dann der Spannschieber seine Freigabestellung erreicht.

Der Spannschieber ist dabei insbesondere als einstückiges Festkörpergelenk ausgebildet, welches insbesondere im Bereich zwischen dem Mittelabschnitt und dem ersten sowie dem zweiten Abschnitt elastisch verformbar ausgebildet ist. Allerdings ist auch denkbar, der Spannschieber mehrteilig ausgebildet ist, wobei insbesondere jeder der drei Abschnitte aus einem eigenen Teil bestehen kann und die jeweils benachbarten Abschnitte mittels Gelenken miteinander verbunden sind. Bei den Gelenken kann es sich insbesondere um Gelenkscharniere oder um Filmscharniere handeln.

Die erfindungsgemäße Spannvorrichtung hat also den Vorteil, dass eine in axialer Richtung wirkende Freigabekraft auf einfache Art und Weise in radialer Richtung derart umgeleitet wird, dass der Spannschieber in die Freigabestellung bewegbar ist. Anders als beim Stand der Technik sind keine aufwändigen Membrandichtungen oder spannelementseitig vorgesehene Druckluftkammern vorzusehen.

Um ein gezieltes Verformen des Spannschiebers bei Beaufschlagung mit der Freigabekraft zu erreichen, ist denkbar, dass der Spannschieber im Mittelabschnitt eine gegenüber dem ersten und/oder zweiten Abschnitt dünnere Wandstärke aufweist, die vorzugsweise im Bereich von 1/2 bis 1/20 und insbesondere im Bereich von 1/4 bis 1/8 der Wandstärke des ersten und/oder zweiten Abschnitts liegt.

Zur Erzeugung der auf den Mittelabschnitt wirkenden Freigabekraft kann insbesondere vorgesehen sein, dass wenigstes ein in einem Zylinderraum wenigstens einseitig fluidisch druckbeaufschlagbarer Kolben vorgesehen ist, der zur Druckbeaufschlagung des Mittelabschnitts mit der Freigabekraft aus einer Spannlage in eine Freigabelage bringbar ist. Insbesondere kann der Kolben einseitig druckbeaufschlagbar und mittels Federelementen vorgespannt ausgebildet sein. Dabei befindet sich dann bei Drucklosschalten des Kolbens dieser in der Spannlage. Wird der Zylinderraum druckbeaufschlagt, so bewegt sich der Kolben in die Freigabelage, wobei gleichzeitig der Mittelabschnitt mit der Freigabekraft beaufschlagt wird. Bei Erreichen der Endhublage des Kolbens hat dann der Spannschieber seine Freigabestellung erreicht.

Um ein definiertes Beaufschlagen des Mittelabschnitts des Spannschiebers durch den Kolben zu gewährleisten, ist vorteilhaft, wenn der Kolben wenigstens in dem Bereich, in dem er mit dem Mittelabschnitt zusammenwirkt, in axialer Richtung wenigstens eine hervorstehende Erhebung aufweist. Die Erhebung kann dabei im Querschnitt insbesondere bauch- oder ballenartig sein. Sie kann vorzugsweise direkt an den Kolben angeformt sein.

Um zu gewährleisten, dass der Spannschieber aus der verformten Freigabelage beim Rückführen des Kolbens in die Spannlage seine Spannstellung sicher einnimmt, ist denkbar, dass am Kolben entsprechende Führungsmittel vorgesehen sind. Die Führungsmittel sind dabei derart, dass der Spannschieber beim Rückführen des Kolbens in die Spannlage zur Erreichung der Spannstellung mitgenommen wird und in der Spannstellung gehalten wird. Das Vorsehen derartiger Führungsmittel hat den Vorteil, dass dann, wenn auf den ersten Abschnitt des Spannschiebers, der mit dem Bauteil zusammenwirkt, Kräfte in nach radial außen gewandter Richtung wirken, ein Abknicken, und damit ein Nachgeben des Spannschiebers in radialer Richtung, sicher unterbunden wird.

Die Führungsmittel können dabei von Führungsschrauben gebildet sein, die derart angeordnet sind, dass wenigstens eine Längsseite des Spannschiebers wenigstens abschnittsweise zwischen dem Schraubenkopf der Führungsschraube und dem Kolben angeordnet ist. Der Kolben und der Schraubenkopf bilden folglich eine Führung, in welcher sich der Spannschieber in radialer Richtung zwar bewegen kann; in axialer Richtung wird der Spannschieber von den Führungsschrauben sicher geführt. Dabei ist insbesondere ein entsprechendes Spiel zwischen den Schraubenköpfen und dem Kolben vorzusehen.

Weiterhin ist vorteilhaft, wenn Federelemente vorgesehen sind, welche den Kolben mit einer der Freigabekraft entgegenwirkenden Stellkraft beaufschlagen, so dass bei drucklos geschaltetem Zylinderraum der Kolben in die Spannlage bewegt wird. Dadurch, dass der Kolben in die Spannlage bewegt wird, wird der Spannschieber in die Spannposition gebracht. Dies insbesondere dann, wenn, wie oben beschrieben, entsprechende Führungsmittel vorgesehen sind.

Bei einer weiteren Ausführungsform der Erfindung ist denkbar, dass der Mittelabschnitt in Draufsicht tailliert ausgebildet ist. Eine derartige Taillierung oder auch sonstige Aussparungen am Spannschieber können zu einer definierten, vorgegebenen Verformung des Spannschiebers beitragen. Zudem kann über eine Taillierung erreicht werden, dass eine bessere Montage der Spannvorrichtung, beziehungsweise der Spannschieber und dem Kolben, erreichbar ist. Die Taillierung kann dabei so ausgebildet sein, dass die Spannschieber in axialer Richtung mit den kolbenseitigen Führungsschrauben so gefügt werden, dass zunächst die Schraubenköpfe der Führungsschrauben in die Taillierungen eingreifen. Nachdem die Spannschieber auf der entsprechenden Seite des Kolbens aufliegen, können diese in radialer Richtung in ihre Endmontageposition verschoben werden. Die den Taillierungen benachbarten Abschnitte befinden sich dann unter den Schraubenköpfen beziehungsweise zwischen den Schraubenköpfen und dem Kolben.

Der Kolben ist vorzugsweise als Ringkolben ausgebildet, der in einem die Aufnahme umgebenden Ringzylinderraum axial bewegbar angeordnet ist. Eine derartige Anordnung hat den Vorteil, dass mit lediglich einem Kolben mehrere, insbesondere identisch ausgebildete Spannschieber, mit der Freigabekraft beaufschlagbar sind. Die Spannschieber erstrecken sich dabei in radialer Richtung, wobei die einzelnen Spannschieber vorzugsweise unter jeweils gleich großen Winkeln voneinander beabstandet sind. Es bietet sich an, insgesamt vier Spannschieber vorzusehen, die jeweils 90° voneinander beabstandet sind.

Der Grundkörper als solcher kann von einem Grundgehäuse mit Zylinderraum und einem Deckelteil zum Verschließen des Zylinderraums gebildet sein.

Insbesondere dann, wenn der Zylinderraum als Ringzylinderraum vorgesehen ist, ist vorteilhaft, wenn den Zylinderraum und den Kolben durchgreifende Dorne vorgesehen sind, welche zur Führung des Kolbens, zur Halterung des Deckelteils und/oder zur Führung von den Kolben in die Spannlage beaufschlagenden Schraubenfedern dienen.

Zur vereinfachten Montage der Spannschieber ist denkbar, dass das Grundgehäuse in seinem Außenumfang Montageaussparungen zum radialen Einführen der Spannschieber aufweist.

Zur Befestigung der Spannschieber können Befestigungsstifte oder -schrauben Verwendung finden, mit denen der Spannschieber im zweiten Abschnitt am Grundkörper befestigt wird.

Weitere Einzelheiten und vorteilhafte Ausgestaltungen der Erfindung sind der nachfolgenden Beschreibung zu entnehmen.

Es zeigen:
- Figur 1: die Draufsicht auf eine erfindungsgemäße Spannvorrichtung;
- Figur 2: einen Schnitt durch die Spannvorrichtung gemäß Figur 1 entlang der Linie A-A in Spannstellung;
- Figur 3: einen Schnitt gemäß Figur 2 in Freigabestellung;
- Figur 4: die Untersicht der Spannvorrichtung gemäß Figur 1;
- Figur 5: einen Schnitt durch die Spannvorrichtung entlang C-C in Figur 4 in Spannstellung;
- Figur 6: der Schnitt gemäß Figur 5 in Freigabestellung;
- Figur 7: die Spannvorrichtung ohne Gehäuse in Spannstellung;
- Figur 8: die Ansicht gemäß Figur 7 in Freigabestellung;
- Figur 9: eine weiteres Ausführungsform eines Spannschiebers gemäß der Erfindung.

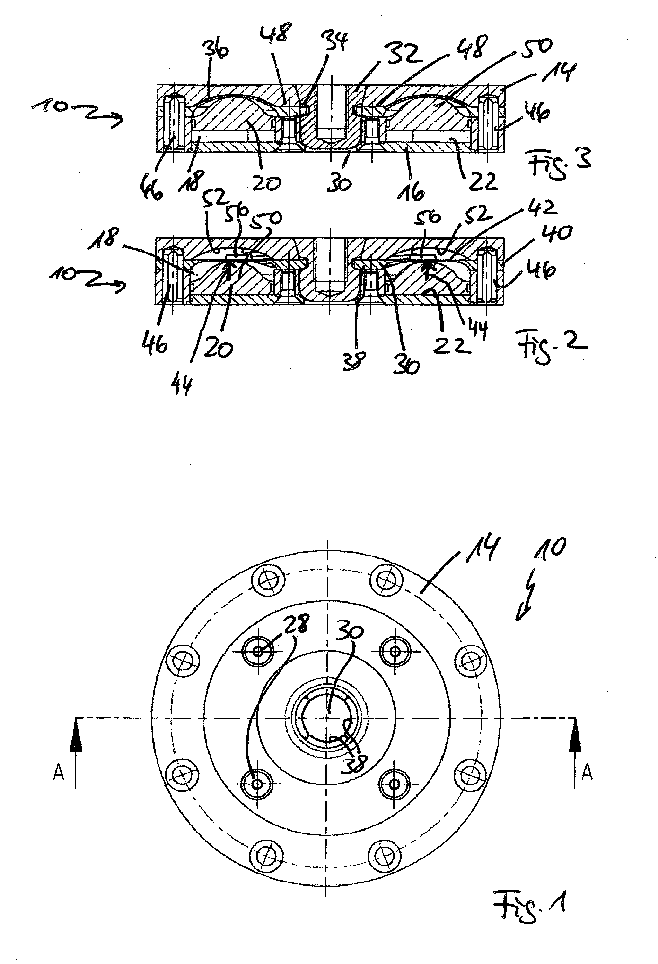

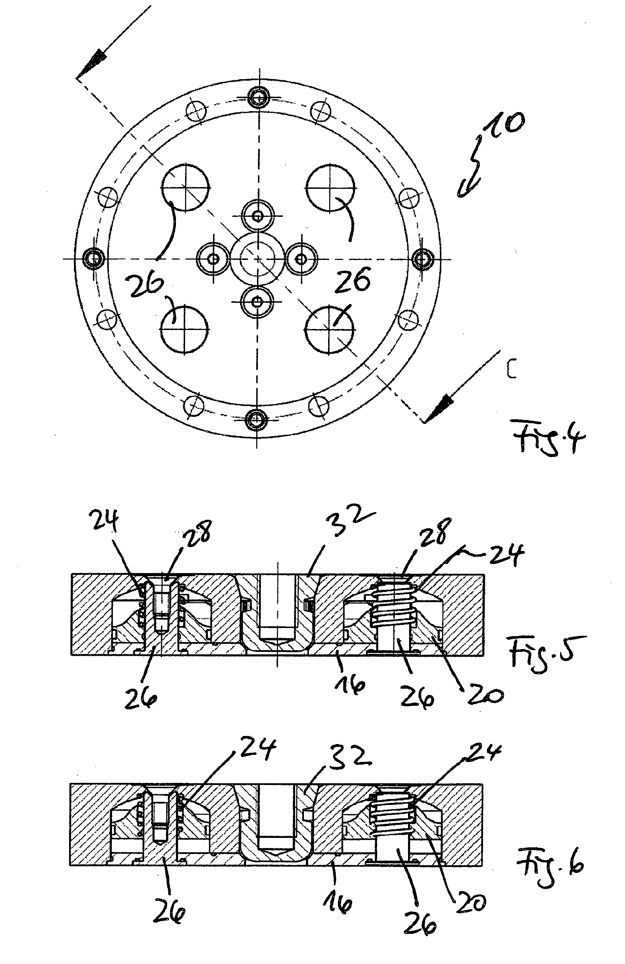

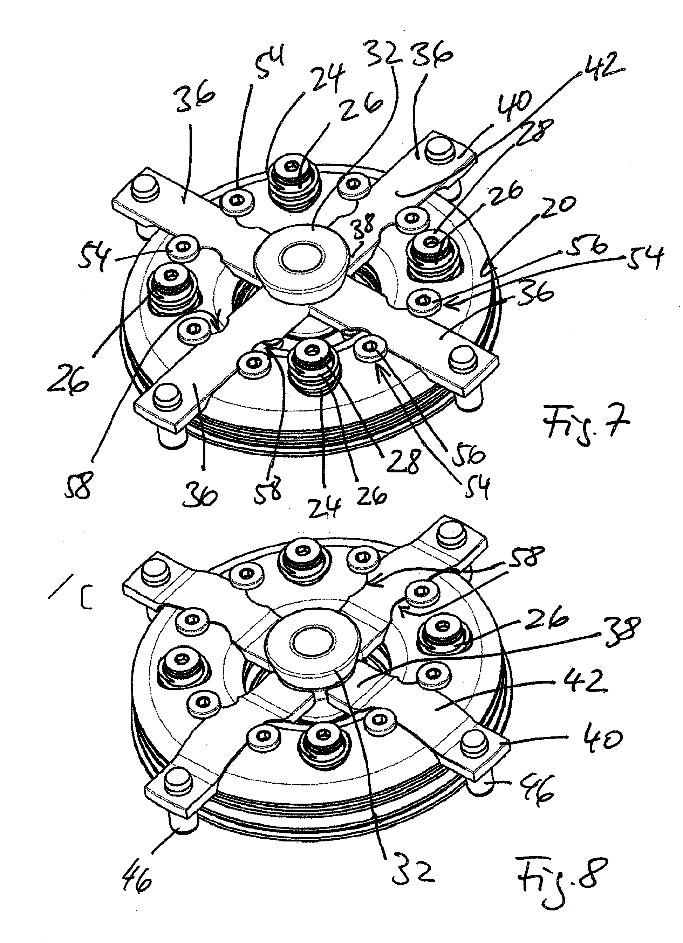

Die in den Figuren dargestellte Spannvorrichtung 10 umfasst einen Grundkörper 12, der von einem Grundgehäuse 14 und einem Deckelteil 16 gebildet wird. Im Grundgehäuse 14 ist dabei ein Ringzylinderraum 18 vorgesehen, in welchem ein Ringkolben 20 zwischen einer in Figur 2 und 5 gezeigten Spannlage und einer in Figur 3 und 6 gezeigten Freigabelage bewegbar ist. Der Ringkolben 20 ist dabei über einen Druckraum 22 einseitig druckbeaufschlagbar. Zum Rückführen des Ringkolbens 20 sind, wie insbesondere aus Figur 5 und 6 deutlich wird, sich am Grundgehäuse 14 abstützende Federelemente 24 vorgesehen. Die Federelemente 24 umgeben dabei den Zylinderraum 18 und den Kolben 20 durchgreifende Dorne 26, welche auch zur Führung des Ringkolbens 20 dienen. Über die Dorne 26 wird zudem das Deckelteil 16 mittels Befestigungsschrauben 28 am Grundgehäuse 14 befestigt. Wie insbesondere aus Figur 7 und 8 deutlich wird, sind insgesamt vier Dorne 26 vorgesehen.

Der Grundkörper 12 sieht eine zentrale Ausnehmung 30 zur Aufnahme eines Bauteils, welches in den Figuren 2, 3 und 5, 6 als Spannbolzen 32 ausgebildet ist. Der Spannbolzen 32 sieht eine umlaufende Nut 34 vor, in welche Spannmittel in Form von insgesamt vier Spannschiebern 36 zur Fixierung des Spannbolzens 32 in der Spannvorrichtung 10 eingreifen können.

In Figur 2 befinden sich die Spannschieber 36 in der Spannstellung und greifen in die Nut 34 ein. In der Figur 3 befinden sich die Spannschieber 36 in der Freigabestellung geben die Nut 34 frei. Der Spannbolzen 32 kann folglich aus der Ausnehmung 30 in axialer Richtung herausgeführt werden.

Wie insbesondere aus den Figuren 2, 3 und 7, 8 deutlich wird, erstrecken sich die Spannschieber 36 jeweils in radialer Richtung und weisen zwei im Wesentlichen parallel verlaufende Längsseiten auf. Jeweils zwei benachbarte Spannschieber 36 schließen einen Winkel von 90° ein. Die Spannschieber 36 weisen jeweils drei Abschnitte auf. Einen ersten, radial innen liegenden Abschnitt 38, der mit dem Spannbolzen 32 zusammenwirkt, einen zweiten radial außen liegenden Abschnitt 40, der am Gehäuse fixiert ist, und einen Mittelabschnitt 42, der zwischen dem ersten Abschnitt 38 und dem zweiten Abschnitt 40 liegt. Die einteiligen Spannschieber 36 sind als Festkörpergelenke derart ausgebildet, dass bei Beaufschlagen des Mittelabschnitts 42 der Spannschieber 36 mit einer in axialer Richtung wirkenden Freigabekraft 44 der Mittelabschnitt 42 in axialer Richtung verlagert wird und dadurch der erste Abschnitt 38 zur Erreichung der Freigabestellung nach radial außen bewegt wird. Wird folglich, ausgehend von Figur 2, der Druckraum 22 mit Druck beaufschlagt, so bewegt sich der Ringkolben 20 nach axial oben. Die Mittelabschnitte 42 der Spannschieber 36 werden dadurch mit der Freigabekraft 44 beaufschlagt und vom Ringkolben 20 mitgenommen. Gleichzeitig rücken die radial innen liegenden ersten Abschnitte 38 der Spannschieber 36 aus der spannbolzenseitigen Nut 34 aus. Bei Erreichen der Hubendlage des Ringkolbens 20 beziehungsweise dessen Freigabelage, befinden sich dann die Spannschieber 36, beziehungsweise deren ersten Abschnitte 38, in der Freigabestellung, wie sie in Figur 3 gezeigt ist.

Um ein geeignetes Verformen der Spannschieber 36 zu ermöglichen, weisen die Mittelabschnitte 42 der Spannschieber 36 gegenüber dem jeweiligen ersten und zweiten Abschnitt 38, 40 eine deutlich dünnere Wandstärke auf, die bei dem in den Figuren gezeigten Ausführungsbeispiel im Bereich von 1/8 der Wandstärke des ersten und zweiten Abschnitts 38, 40 liegt. Der erste und der zweite Abschnitt 38, 40 sehen, wie aus Figur 2 und 3 deutlich wird, gleiche Wandstärken vor.

Der jeweils zweite Abschnitt 40 der Spannschieber ist, wie aus Figur 2, 3 und 7, 8 deutlich wird, mittels Befestigungsstiften 46 am Grundgehäuse befestigt. Die ersten, radial innen liegenden Abschnitte 38 der Spannschieber 36 durchgreifen eine grundgehäuseseitige Schiebeführung 48 und sind damit am Grundgehäuse 14 verschieblich geführt gelagert.

Um eine genau vorgegebene Verformung der Mittelabschnitte 42 der Spannschieber 36 zu gewährleisten, weist der Ringkolben 20 auf seiner den Spannschiebern 36 zugewandten Seite eine Erhebung 50 auf, die im Schnitt gemäß Figur 2 und 3 ballig ausgebildet ist. Entsprechend sieht das Grundgehäuse 14 auf der inneren, der Erhebung 50 des Ringkolbens 20 zugewandten Seite einen entsprechend gekrümmt ausgebildeten Anlageabschnitt 52 für die jeweiligen Mittelabschnitte 42 der jeweiligen Spannschieber 36 auf.

Wie aus Figur 7 und 8 deutlich wird, sind auf der Seite des Ringkolbens 20, welche mit den Spannschiebern 36 zusammenwirkt, Führungsmittel in Form von Führungsschrauben 54 vorgesehen. Jedem Spannschieber 36 sind zwei einander gegenüberliegende Führungsschrauben 54 zugeordnet. Die Führungsschrauben 54 weisen jeweils einen Schraubenkopf 56 auf, wobei die Spannschieber 36, beziehungsweise deren jeweiligen Längsseiten, in den Bereich zwischen dem Ringkolben 20 und den Schraubenköpfen 56 liegen. Insofern wird jeder Spannschieber 36 von zwei Führungsschrauben 54, beziehungsweise deren Schraubenköpfe 56, am Ringkolben 20 geführt gehalten. Aufgrund von vorzusehendem Spiel ist eine radiale Bewegung der Spannschieber 36 bezüglich der Führungsschrauben 54 möglich. Ein Abheben in axialer Richtung der Spannschieber 36 vom Ringkolben 20 wird über die Führungsschrauben 54, beziehungsweise deren Schraubenköpfe 56, verhindert.

Durch Vorsehen der Führungsschrauben 54 wird insbesondere gewährleistet, dass bei in radialer Richtung auf die ersten Abschnitte 38 der Spannschieber 36 wirkenden Kräfte ein ungewolltes Bewegen der Spannschieber 36 in deren Freigabeposition unterbunden wird. Da die Mittelabschnitte 42 der Spannschieber 36 am Ringkolben 20 gehalten werden, können die Mittelabschnitte 42 nicht ungewollt vom Ringkolben 20 abheben beziehungsweise nach oben hin abknicken, wodurch die Spannschieber 36 aus der Spannposition in die Freigabeposition überführt werden könnten.

Aus Figur 7 und 8 wird deutlich, dass die Spannschieber in deren Mittelabschnitten 42 jeweils eine Taillierung 58 vorsehen. Die Taillierung 58 dient insbesondere zur vereinfachten Montage der Spannvorrichtung 10. Zur Montage der Spannschieber 36 können diese insbesondere in radialer Richtung in entsprechende Ausnehmungen am Grundgehäuse 12 eingeschoben werden. Bevor die Spannschieber 36 ihre Endmontageposition erreichen, kann dann in einem nächsten Arbeitsschritt der Ringkolben 20 in axialer Richtung in den Zylinderraum 18 derart eingeführt werden, dass die Führungsschrauben 54, beziehungsweise deren Schraubenköpfe 56, die Taillierungen 58 passieren. Danach können die Spannschieber 36 weiter in axialer Richtung so weit in das Grundgehäuse 14 eingeschoben werden, bis sie ihre Endmontageposition erreichen. Schließlich können die Spannschieber 36 dann mit den Stiften 46 gesichert werden.

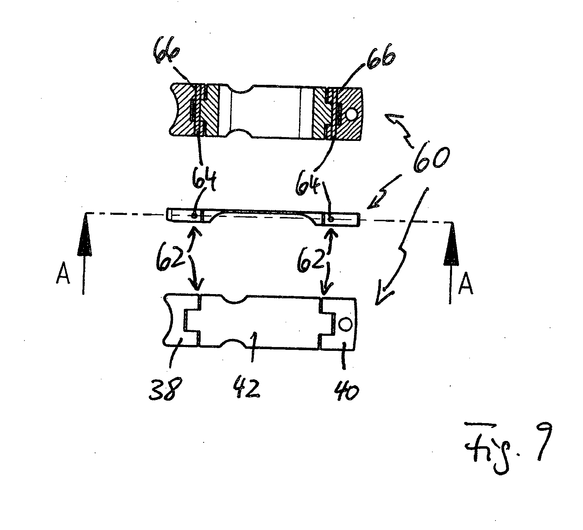

In Figur 9 ist ein Spannschieber 60 in verschiedenen Ansichten dargestellt, der anstelle des als Festkörpergelenk ausgebildeten Spannschiebers 36 in der Spannvorrichtung 10 Verwendung finden kann. Die drei Abschnitte 38, 40, 42 des Spannschiebers 60 werden dabei jeweils von separaten Teilen gebildet, die über einfache Scharniergelenke 62 miteinander verbunden sind. Dazu sind Scharnierstifte 64 vorgesehen, die in zugehörigen Stiftaufnahmen 66 angeordnet sind. Hierdurch kann ein einfacheres und definiertes Verformen des Spannschiebers 60 im Vergleich zum Spannschieber 36 erreicht werden.

Auch beim Spannschieber 60 ist der Mittelabschnitt 42, insbesondere in dessen mittleren Bereich wo die Freigabekraft angreift, vergleichsweise dünn ausgebildet. Dadurch kann gewährleistet werden, dass sich der Spannschieber 60 aufgrund der Freigabekraft 44 nicht nur in den Bereichen der Scharniergelenke 62 verformt, sondern dass auch der Mittelabschnitt 42 nach oben hin verformt wird. Dennoch wird der erste Abschnitt 38 dabei weitestgehend nur in radialer Richtung bewegt, wodurch einem Verkanten des ersten Abschnitts 38 in der Schiebeführung 48 entgegen gewirkt werden kann.

## Patentansprüche

1. Spannvorrichtung (10) zur Fixierung eines Bauteils (32), mit einer in einem Grundkörper (12) vorgesehenen Aufnahme (30), in die das Bauteil (32) einsetzbar ist, und mit Spannmitteln, mit denen in einer radial inneren Spannstellung das in der Aufnahme vorhandene Bauteil (32) fixierbar und in einer radial äußeren Freigabestellung das Bauteil freigebbar ist, wobei die Spannmittel wenigstens ein sich im Wesentlichen in radialer Richtung erstreckenden Spannschieber (36, 60) umfassen, welcher einen radial inneren ersten Abschnitt (38), einen radial äußeren zweiten Abschnitt (40) und einen zwischen dem ersten Abschnitt (38) und dem zweiten Abschnitt (40) liegenden Mittelabschnitt (42) aufweist, wobei der zweite Abschnitt (40) fest am Grundköper (12) und der erste Abschnitt (38) in radialer Richtung derart verschieblich am Grundköper (12) angeordnet ist, dass bei Beaufschlagen des Mittelabschnitts (42) mit einer in axialer Richtung wirkenden Freigabekraft (44) der Mittelabschnitt in (42) axialer Richtung verlagert und dadurch der erste Abschnitt (38) zur Er=eichung der Freigabestellung nach radial außen bewegt wird, **dadurch gekennzeichnet, dass** wenigstens ein in einem Zylinderraum (18) wenigstens einseitig fluidisch druckbeaufschlagbarer Kolben (20) vorgesehen ist, der zur Beaufschlagung des Mittelabschnitts (42) mit der Freigabekraft (44) aus einer Spannlage in eine Freigabelage bringbar ist.

2. Spannvorrichtung (10) nach Anspruch 1, **dadurch gekennzeichnet, dass** der Spannschieber (36) als einstückiges Festkörpergelenk ausgebildet ist.

3. Spannvorrichtung (10) nach Anspruch 1, **dadurch gekennzeichnet, dass** der Spannschieber (60) als mehrteiliges Gelenkteil ausgebildet ist.

4. Spannvorrichtung (10) nach Anspruch 1, 2 oder 3,
**dadurch gekennzeichnet, dass** der Spannschieber (36, 60) im Mittelabschnitt (42) eine gegenüber dem ersten und/oder zweiten Abschnitt (38, 40) dünnere Wandstärke aufweist, die vorzugsweise im Bereich von 1/2 bis 1/20 und insbesondere im Bereich von 1/4 bis 1/8 der Wandstärke des ersten und/oder zweiten Abschnitts (38, 40) liegt.

5. Spannvorrichtung (10) nach einem der vorhergehenden Ansprüche, **dadurch gekennzeichnet, dass** der Kolben (20) wenigstens in dem Bereich, in dem er mit dem Mittelabschnitt (42) zusammenwirkt in axialer Richtung wenigstens eine hervorstehende Erhebung (50) aufweist.

6. Spannvorrichtung (10) nach einem der vorhergehenden Ansprüche, **dadurch gekennzeichnet, dass** am Kolben (20) Führungsmittel (54) vorgesehen sind, die den Spannschieber (36, 60) beim Rückführen des Kolbens (20) in die Spannlage zur Erreichung der Spannstellung mitnehmen und in der Spannstellung halten.

7. Spannvorrichtung (10) nach Anspruch 6, **dadurch gekennzeichnet, dass** die Führungsmittel (54) von Führungsschrauben derart gebildet werden, dass eine Längsseite des Spannschiebers (36, 60) wenigstens abschnittsweise zwischen dem Schraubenkopf (56) und dem Kolben (20) angeordnet ist.

8. Spannvorrichtung (10) nach einem der vorhergehenden Ansprüche, **dadurch gekennzeichnet, dass** Federelemente (24) vorgesehen sind, welche den Kolben (20) mit einer der Freigabekraft (44) entgegen wirkenden Stellkraft beaufschlagen, so dass bei drucklos geschaltetem Zylinderraum (18, 22) der Kolben (20) in die Spannlage bewegt wird.

9. Spannvorrichtung (10) nach einem der vorhergehenden Ansprüche, **dadurch gekennzeichnet, dass** der Mittelabschnitt (42) in Draufsicht tailliert ausgebildet ist.

10. Spannvorrichtung (10) nach einem der vorhergehenden Ansprüche, **dadurch gekennzeichnet, dass** der Kolben (20) als Ringkolben ausgebildet ist, der in einem die Aufnahme umgebenden Ringzylinderraum (18) axial bewegbar angeordnet ist.

11. Spannvorrichtung (10) nach einem der vorhergehenden Ansprüche, **dadurch gekennzeichnet, dass** mehrere identisch ausgebildete Spannschieber (36, 60) vorgesehen sind.

12. Spannvorrichtung (10) nach einem der vorhergehenden Ansprüche, **dadurch gekennzeichnet, dass** der Grundkörper (12) von einem Grundgehäuse (14) mit Zylinderraum (18) und einem Deckelteil (16) zum Verschließen des Zylinderraums (18) gebildet wird.

13. Spannvorrichtung (10) nach Anspruch 12, **dadurch gekennzeichnet, dass** den Zylinderraum (18) und den Kolben (20) durchgreifende Dorne (26) vorgesehen sind, welche zur Führung des Kolbens (20), zur Halterung des Deckelteils (16) und/oder zur Führung von den Kolben (20) in die Spannlage beaufschlagenden Schraubenfedern (24) dienen.

14. Spannvorrichtung (10) nach Anspruch 12 oder 13, **dadurch gekennzeichnet, dass** das Grundgehäuse (14) seitliche Montageaussparungen zum Einführen der Spannschieber (36, 60) aufweist.

15. Spannvorrichtung (10) nach einem der vorhergehenden Ansprüche, **dadurch gekennzeichnet, dass** Befestigungsschrauben oder -stifte (46) vorgesehen sind, mit denen der Spannschieber (36, 60) im zweiten Abschnitt (40) am Grundkörper (12) befestigt ist.

## Claims

1. A tensioning device (10) for fixing a component (32), having a receptacle (30) provided in a base body (12), into which receptacle the component (32 is insertable, and having tensioning means with which, in a radially inner tensioning position, the component (32) present in the receptacle is fixable and, in a radially outer release position, the component is releasable, and the tensioning means include at least one essentially radially extending tensioning bar (36, 60), which has a radially inner first portion (38), a radially outer second portion (40), and a middle portion (42) located between the radially inner first portion (38) and the radially outer second portion (40), the second portion (40) being disposed fixedly on the base body (12) and the first portion (38) being disposed radially displaceably on the base body (12) such that when a releasing force (44) acting in the axial direction is exerted on the middle portion (42), the middle portion (42) is shifted in the axial direction, and as a result the first portion (38) is moved radially outward for reaching the release position, **characterized in that** at least one piston (20)which can be subjected at least on one end to fluidic pressure in a cylindrical chamber (18) is provided, and which for subjecting the middle portion (42) to the releasing force (44) can be put from a tensioning location into a release location.

2. The tensioning device (10) of claim 1, **characterized in that** the tensioning bar (36) is embodied as a one-piece solid-state joint.

3. The tensioning device (10) of claim 1, **characterized in that** the tensioning bar (60) is embodied as a multi-piece link part.

4. The tensioning device (10) of claim 1, 2 or 3, **characterized in that** the tensioning bar (36, 60) in the middle portion (42) has a thinner wall thickness than the first and/or second pori6ton (38, 40), which is preferably in the range from ½ to 1/20 and in particular in the range from ¼ to 1/8 of the wall thickness of the first and/or second portion (38, 40).

5. The tensioning device (10) of one of the foregoing claims, **characterized in that** in the axial direction, the piston (20), at least in the region in which it cooperates with the middle portion (42), has at least one protuberance (50).

6. The tensioning device (10) of one of the foregoing claims, **characterized in that** on the piston (20) guide means (54) are provided, which upon the return of the piston (20) to the tensioning location entrain the tensioning bar (36, 60) for reaching the tensioning position and keep it in the tensioning position.

7. The tensioning device (10) of claim 6, **characterized in that** the guide means (54) are formed by guide screws, such that a long side of the tensioning bar (36, 60) is at least intermittently disposed between the screw head (56) and the piston (20).

8. The tensioning device (10) of one of the foregoing claims, **characterized in that** spring elements (24) are provided, which subject the piston (20) to an adjusting force counter to the releasing force (44), so that when the cylindrical chamber (18, 22) is depressurized, the piston (20) is moved into the tensioning location.

9. The tensioning device (10) of one of the foregoing claims, **characterized in that** the middle portion (42) is embodied with a narrowed waist in plan view.

10. The tensioning device (10) of one of the foregoing claims, **characterized in that** the piston (20) is embodied as an annular piston, which is disposed axially movably in an annular cylindrical chamber (18) surrounding the receptacle.

11. The tensioning device (10) of one of the foregoing claims, **characterized in that** a plurality of identically embodied tensioning bars (36, 60) are provided.

12. The tensioning device (10) of one of the foregoing claims, **characterized in that** the base body (12) is formed by a basic housing (14) with a cylindrical chamber (18) and a cover part (16) for closing off the cylindrical chamber (18).

13. The tensioning device (10) of claim 12, **characterized in that** mandrels (26) passing through the cylindrical chamber (18) and the piston (20) are provided, which serve to guide the piston (20), to retain the cover part (16), and/or to guide helical springs (24) that urge the piston (20) into the tensioning location.

14. The tensioning device (10) of claim 12 or 13, **characterized in that** the basic housing (14) has lateral mounting recesses for inserting the tensioning bars (36, 60).

15. The tensioning device (10) of one of the foregoing claims, **characterized in that** fastening screws or pins (46) are provided, with which the tensioning bar (36, 60) is fastened in its second portion (40) to the base body (12).

## Revendications

1. Dispositif de serrage (10) pour fixer un élément (32), comprenant un logement (30) prévu dans un corps de base (12) dans lequel l'élément (32) peut venir se loger, et comprenant des moyens de serrage grâce auxquels l'élément (32) installé dans le logement peut être fixé dans une position de serrage intérieure radiale et peut être libéré dans une position de libération extérieure radiale, dans lequel les moyens de serrage comprennent au moins un coulisseau de serrage (36, 60) s'étendant essentiellement dans le sens radial, lequel coulisseau comprend une première section radiale intérieure (38), une deuxième section radiale extérieure (40) et une section médiane (42) située entre la première section (38) et la deuxième section (40), la deuxième section (40) étant agencée fixement au corps de base (12) et la première section (38) étant agencée mobile dans le sens radial sur le corps de base (12) de sorte que, lorsqu'on sollicite la section médiane (42) avec une force de libération (44) agissant dans le sens axial, la section médiane (42) est déplacée dans le sens axial et la première section (38) est ainsi déplacée radialement vers l'extérieur pour atteindre la position de libération, **caractérisé en ce qu'**il est prévu au moins un piston (20) pouvant être sollicité en pression par fluide au moins d'un côté dans une chambre de cylindre (18), lequel piston, pour solliciter la section médiane (42) en force de libération (44) peut être amené d'une position de serrage à une position de libération.

2. Dispositif de serrage (10) selon la revendication 1, **caractérisé en ce que** le coulisseau de serrage (36) est réalisé sous la forme d'une articulation rigide d'un seul tenant.

3. Dispositif de serrage (10) selon la revendication 1, **caractérisé en ce que** le coulisseau de serrage (60) est réalisé sous la forme d'une pièce d'articulation en plusieurs parties.

4. Dispositif de serrage (10) selon la revendication 1, 2 ou 3, **caractérisé en ce que** le coulisseau de serrage (36, 60) présente dans la section médiane (42) une épaisseur de paroi plus mince que la première et/ou la deuxième section (38, 40), laquelle épaisseur de paroi est comprise de préférence dans la plage allant de 1/2 à 1/20, et en particulier dans la plage allant de 1/4 à 1/8 de l'épaisseur de paroi de la première et/ou de la deuxième section (38, 40).

5. Dispositif de serrage (10) selon l'une des revendications précédentes, **caractérisé en ce que** le piston (20) présente au moins dans la zone dans laquelle il interagit avec la section médiane (42) dans le sens axial au moins un bossage (50) en saillie.

6. Dispositif de serrage (10) selon l'une des revendications précédentes, **caractérisé en ce qu'**il est prévu sur le piston (20) des moyens de guidage (54) qui entraînent le coulisseau de serrage (36, 60) lors du retour du piston (20) en position de serrage pour atteindre la position de serrage et qui le maintiennent en position de serrage.

7. Dispositif de serrage (10) selon la revendication 6, **caractérisé en ce que** les moyens de guidage (54) sont formés de vis de guidage de sorte qu'un côté longitudinal du coulisseau de serrage (36, 60) est agencé au moins par endroits entre la tête de vis (56) et le piston (20).

8. Dispositif de serrage (10) selon l'une des revendications précédentes, **caractérisé en ce qu'**il est prévu des éléments de ressort (24) qui sollicitent le piston (20) avec une puissance de réglage agissant contre la force de libération (44), de sorte que, lorsque la chambre de cylindre (18, 22) n'est pas sous pression, le piston (20) est déplacé en position de serrage.

9. Dispositif de serrage (10) selon l'une des revendications précédentes, **caractérisé en ce que** la section médiane (42) est réalisée cintrée dans une vue de dessus.

10. Dispositif de serrage (10) selon l'une des revendications précédentes, **caractérisé en ce que** le piston (20) est réalisé sous la forme d'un piston annulaire qui est agencé mobile axialement dans une chambre de cylindre annulaire (18) entourant le logement.

11. Dispositif de serrage (10) selon l'une des revendications précédentes, **caractérisé en ce qu'**il est prévu plusieurs coulisseaux de serrage (36, 60) réalisés identiques.

12. Dispositif de serrage (10) selon l'une des revendications précédentes, **caractérisé en ce que** le corps de base (12) est formé par un boîtier de base (14) avec une chambre de cylindre (18) et une partie de couvercle (16) pour fermer la chambre de cylindre (18).

13. Dispositif de serrage (10) selon la revendication 12, **caractérisé en ce qu'**il est prévu des mandrins (26) qui traversent la chambre de cylindre (18) et le piston (20), lesquels servent à guider le piston (20), à maintenir la partie de couvercle (16) et/ou à guider le piston (20) dans les ressorts cylindriques (24) sollicitant la position de serrage.

14. Dispositif de serrage (10) selon la revendication 12 ou 13, **caractérisé en ce que** le boîtier de base (14) présente des évidements de montage latéraux pour introduire les coulisseaux de serrage (36, 60).

15. Dispositif de serrage (10) selon l'une des revendications précédentes, **caractérisé en ce qu'**il est prévu des vis ou des broches de fixation (46) avec lesquelles le coulisseau de serrage (36, 60) est fixé au corps de base (12) dans la deuxième section (40).
